# EUROPÄISCHE PATENTSCHRIFT

(11) **EP 1 762 342 B1**
(45) Veröffentlichungstag und Bekanntmachung des Hinweises auf die Patenterteilung: **02.09.2009**
(21) Anmeldenummer: 06120116.6
(22) Anmeldetag: 05.09.2006
(51) Int. Cl.: B25C 1/14, F16F 7/01

(54) **Setzgerät**
Fastener setting tool
Outil de scellement

(30) Priorität: 13.09.2005 DE 102005000114
(43) Veröffentlichungstag der Anmeldung: 14.03.2007
(73) Patentinhaber: HILTI Aktiengesellschaft, 9494 Schaan (LI)
(72) Erfinder: Hahn, Wolfram, 88046 Friedrichshafen (DE); Franz, Karl, 6800 Feldkirch (AT); Dittrich, Tilo, 9473 Gams (CH)
(74) Vertreter: Wildi, Roland

(56) Entgegenhaltungen:
- EP-A2- 1 088 627
- DE-A1- 3 930 592
- DE-A1- 4 130 445
- DE-B- 1 180 283
- DE-C1- 19 617 671
- FR-A1- 2 653 869
- SU-A1- 757 409
- SU-A1- 983 344
- US-A- 4 824 003

## Beschreibung

Die vorliegende Erfindung betrifft ein Setzgerät der im Oberbegriff des Patentanspruchs 1 genannten Art. Derartige Setzgeräte können mit festen, gasförmigen oder flüssigen Brennstoffen oder auch mit Druck- oder Pressluft betrieben werden. Bei den verbrennungsbetriebenen Setzgeräten wird ein Setzkolben über die Verbrennungsgase angetrieben. Über diesen Setzkolben können dann Befestigungselemente, wie z. B. Nägel oder Bolzen, in einen Untergrund eingetrieben werden.

Bei Setzgeräten ist es aus der DE 39 30 592 A1 bekannt, den Kolben in einer Kolbenführung zu führen, die in einer Gehäusehülse des Setzgerätes axial versetzbar angeordnet ist. Damit ein Setzvorgang ausgelöst werden kann muss das Setzgerät an einen Untergrund angepresst werden, so dass die Kolbenführung in die Gehäusehülse eingedrückt wird. Zum Abbau der Kolbenenergie bei Fehlsetzungen oder bei Überenergie ist vorne in der Kolbenführung, an deren einer Bolzenführung zugewandtem Endbereich ein elastischer Ringkörper vorgesehen, der den Kolben abfängt.

Von Nachteil hierbei ist jedoch, dass, wenn der Verschleiss des elastischen Ringkörpers zu gross ist und dieser nicht erkannt wird, wesentliche und teure Gerätebauteile Schaden nehmen können. Ferner muss der Bund des Kolbens, der auf den Ringkörper auftrifft einen möglichst grossen Durchmesser aufweisen, um eine vorzeitige Zerstörung des elastischen Ringkörpers zu vermeiden. Das Gerätegewicht wird hierdurch erhöht. Zum anderen prellt der Kolben aufgrund der Elastizität des Ringkörpers nach dem Auftreffen auf diesen zurück, so dass es insbesondere bei hohen Setzenergien zu einem ungewollten Nachschlagen des Kolbens kommen kann.

Aus der DE 196 17 671 C1, von der die vorliegende Erfindung ausgeht, ist ein pulverkraftbetriebenes Bolzensetzgerät mit einem in einer Laufführungsbohrung angeordneten Kolben bekannt. Der Kolben weist einen Kolbenkopf und einen Kolbenschaft auf, wobei der Kolbenkopf an seiner dem Kolbenschaft zugewandten Seite einen konischen Abschnitt ausbildet. Diesem konischen Abschnitt des Kolbens gegenüberliegend ist eine konische Aufnahme am mündungsseitigen Ende des Laufvorderteils angeordnet, in die der konische Abschnitt bei einer Fehlsetzung oder bei einem Setzvorgang mit Überenergie einfahren kann. Eine in Setzrichtung hinter der konischen Aufnahme angeordnete Dämpfungsscheibe dämpft dabei das Auftreffen des Kolbens.

Ein erhöhter Verschleiss der elastischen Dämpfungsscheibe, wie er bei dem aus der DE 39 30 592 A1 bekannten Setzgerät auftreten kann, ist hier vermieden. Jedoch ist auch hier von Nachteil, dass es zu einem Prellen und damit zu einem Nachschlagen des Kolbens kommen kann.

Aus der US 4,824,003 ist ein Setzgerät bekannt, bei dem zwischen der Kolbenführung und der Bolzenführung ein erster rigider und ein elastischer Ring hintereinander angeordnet sind. In dem elastischen Ring ist ferner noch ein weiterer rigider Ring angeordnet, der den Hub des ersten rigiden Rings begrenzt. Der erste rigide Ring weist eine, sich in Setzrichtung konisch verengende Durchführung für den Kolbenschaft auf. Der Kolben ist an der, dem ersten rigiden Ring zugewandten Kolbenbundfläche konisch ausgebildet, wobei die Konturen der konischen Kolbenfläche und der konischen Durchführung des ersten rigiden Rings einander ergänzen.

Auch hier besteht der Nachteil, dass es zu einem Prellen und damit zu einem Nachschlagen des Kolbens kommen kann.

Die Aufgabe der vorliegenden Erfindung liegt daher darin, ein Setzgerät der vorgenannten Art zu entwickeln, das die vorgenannten Nachteile vermeidet und die Rückprellgeschwindigkeit des Kolbens auf ein Minimum reduziert.

Die erfindungsgemässe Aufgabe wird durch ein Setzgerät mit den Merkmalen von Anspruch 1 gelöst. Demnach ist es ausreichend, wenn ein Stoppelement einen ersten Ring und einen zweiten Ring aufweist, die koaxial zueinander liegen und gegeneinander versetzbar sind und zwischen denen ein mit Partikeln befüllter und gegenüber diesen Partikeln dichter Aufnahmeraum angeordnet ist. Hierdurch wird bei einer Fehlsetzung eine nahezu vollständige Umsetzung der Aufprallenergie des Setzkolbens in Wärme erreicht, welche bei der Reibung der Partikel aneinander entsteht, wenn der erste Ring unter Kompression des Aufnahmeraums und der darin befindlichen Partikel in Richtung auf den zweiten Ring gedrückt wird. Ein Rückprellen des Setzkolbens wird durch die Partikel ebenfalls weitgehend verhindert. Der erste Ring und der zweite Ring stützen sich über ein elastisches Element, wie z. B. ein Federelement oder ein Gummielement, gegeneinander ab, wodurch auf einfache Weise eine Rückstellung der beiden Ringe voneinander und ein Auseinanderziehen des Aufnahmeraums nach einem Aufschlag des Setzkolbens gewährleistet wird. Der zweite Ring kann dabei auch einteilig mit der Bolzenführung ausgebildet sein.
Der Aufnahmeraum kann dabei z. B. eine Höhe senkrecht zu einer Basis von 1 - 5 mm aufweisen.

Vorteilhaft erstreckt sich der Aufnahmeraum zwischen zwei sich gegenüberliegenden konischen Begrenzungsflächen der beiden Ringe. Der Aufnahmeraum hat dadurch eine korrespondierende konische Form, die eine gute Druckverteilung auf die Partikel gewährleistet.

Günstig ist es dabei, wenn das elastische Element ein elastischer Ringkörper ist, der zwischen dem ersten Ring und dem zweiten Ring angeordnet ist und der den Aufnahmeraum nach radial aussen hin abschliesst. Durch einen derartigen Ringkörper wird dann nicht nur die Rückstellung der Ringe und das Wiederauseinanderdrücken des Aufnahmeraums erreicht, sondern auch ein Abdichten des Aufnahmeraums gegen ein Austreten von Partikeln nach radial aussen. Ferner können die Partikel unter Druck auch in Richtung des Ringkörpers ausweichen, wodurch die Schubbewegung zwischen oberem und unterem Ring positiv beeinflusst werden kann.

Vorteilhaft weisen die Partikel eine Korngrösse zwischen 0,1 mm und 5,0 mm auf. Die Korngrösse entspricht dabei bei kugelförmigen Partikeln deren Durchmesser. Partikel dieser Grösse verhindern besonders gut ein Rückprellen des Setzkolbens.

Von Vorteil ist es ebenfalls, wenn die Partikel umfänglich mit einem Schmiermittel, wie z. B. Öl oder Graphit, versehen sind, wodurch die Rückstelleingenschaften der Partikel verbessert werden.

Vorteilhaft ist es ferner, wenn die Partikel als Stahlkugeln ausgebildet sind, die eine Härte von 40 - 65 HRC aufweisen. Diese haben gute mechanische Eigenschaften und erreichen eine hohe Lebensdauer. Denkbar ist aber auch die Verwendung anderer Metalle, Keramik oder geeigneten Mineralen.

In einer vorteilhaften Ausgestaltung mit guter Druckverteilung auf die Partikel weisen die konischen Begrenzungsflächen jeweils gleiche Konushalbwinkel in einem Bereich von 10° bis 50° auf.

Alternativ können die konischen Begrenzungsflächen auch Konushalbwinkel aufweisen, die in einem Bereich von 10° bis 50° liegen und die sich um 0,5° bis 5° unterscheiden. Dieses kann je nach dem Material und der Körnung der Partikel vorteilhaft sein.

In einer vorteilhaften Variante, ist in dem Aufnahmeraum noch wenigstens ein nachgiebiges Element, wie z. B. ein stark komprimierbares Schaumstoffteil, angeordnet. Durch diese Massnahme wird ein Ausweichraum für die Partikel zur Verfügung gestellt, der innerhalb des Aufnahmeraums liegt. Alternativ zu einem Schaumstoffteil könnte zwischen dem elastischen Ringkörper und der ihn umfänglich umgebenden Hülse auch ein Hohlraum vorgesehen sein, in den der elastische Ringkörper ausweichen kann.

Weitere Vorteile und Massnahmen der Erfindung ergeben sich aus den Unteransprüchen, der nachfolgenden Beschreibung und den Zeichnungen. In den Zeichnungen ist die Erfindung in mehreren Ausführungsbeispielen dargestellt.

Es zeigen:
- Fig. 1: Schematisch, ein erfindungsgemässes Setzgerät mit einer Kolbenstoppeinrichtung, teilweise im Längsschnitt,
- Fig. 2a: ein vergrössertes Detail des Setzgerätes gemäss der Markierung IIa aus Fig. 1,
- Fig. 2b: das der Figur 2a entsprechende Detail aus Fig. 1 bei verschlissenem Kolbenstoppelement,
- Fig. 3: ein Detail eines weiteren Setzgerätes im Halb-Längsschnitt,
- Fig. 4: ein Detail eines weiteren Setzgerätes im Längsschnitt.

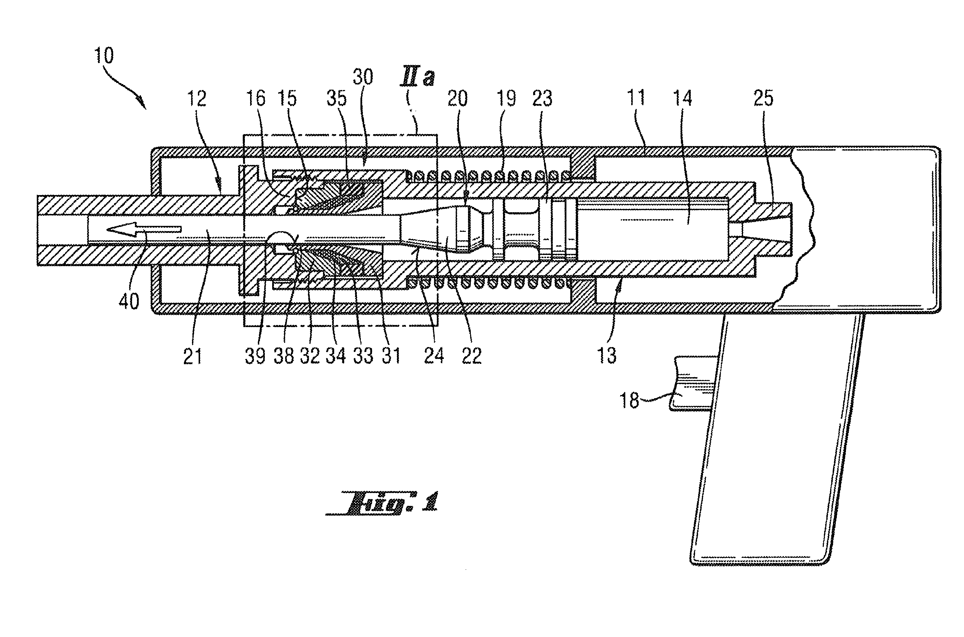

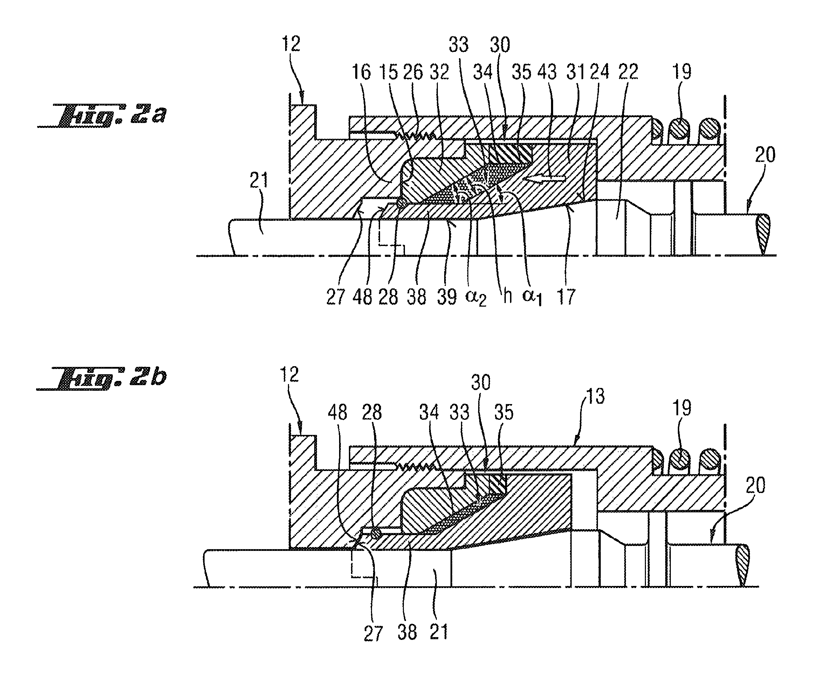

In den Figuren 1 und 2a ist ein handgeführtes Setzgerät 10 wiedergegeben, das eine insgesamt mit 30 bezeichnete Kolbenstoppeinrichtung aufweist. Das Setzgerät 10 weist dabei ferner eine, in einem ein- oder mehrteiligen Gehäuse 11 angeordnete Kolbenführung 13 auf. In einem Hohlraum 14 der Kolbenführung 13 ist ein Setzkolben 20 versetzbar angeordnet, der über ein Treibmittel oder dessen Reaktionsprodukte, wie z. B. Verbrennungsgase oder etc., antreibbar ist. Der Setzkolben 20 weist einen Kolbenschaft 21 auf der sich in Setzrichtung 40 des Setzgerätes 10 an einen Kolbenkopf 23 anschliesst. Ein Kolbenbund 22 ist beabstandet von dem Kolbenkopf 23 auf dem Kolbenschaft 21 angeordnet und weist eine in Richtung der Kolbenstoppeinrichtung 30 angeordnete Gegenstoppfläche 24 auf, welche in dem Ausführungsbeispiel konisch ausgebildet ist. Der Kolbenbund 22 mit der Gegenstoppfläche 24 könnte abweichend von der hier dargestellten Ausführungsform aber auch direkt am in Setzrichtung 40 liegenden Bereich des Kolbenkopfes 23 angeordnet sein. Die Kolbenführung 13 ist verschieblich in dem hülsenartig ausgebildeten Gehäuse 11 gelagert, gegen das sie sich über ein Federelement 19 elastisch abstützt. An dem entgegen der Setzrichtung 40 liegenden Ende der Kolbenführung 13 ist ein Kartuschenlager 25 zur Aufnahme einer Treibladung, z. B. in Form einer Kartusche, einer Pille oder eines Blisters, angeordnet.

Ein Setzvorgang mit dem Setzgerät 10 ist nur möglich, wenn das Setzgerät 10 mit einer, der Kolbenführung 13 in Setzrichtung vorgelagerten Bolzenführung 12 an einen hier nicht dargestellten Untergrund angepresst wird. Die Bolzenführung 12 ist an einer Schnittstelle 26, die z. B. als Gewinde ausgebildet ist, mit der Kolbenführung verbunden. Zum Auslösen eines Setzvorgangs ist an dem Setzgerät 10 noch ein Auslöseschalter 18 angeordnet.

An dem der Bolzenführung 12 zugewandten Ende der Kolbenführung 13 ist die bereits erwähnte Kolbenstoppeinrichtung 30 angeordnet, die sich an einem Anschlag 15 einer Aufnahme 16 der Bolzenführung 12 abstützt. Diese Kolbenstoppeinrichtung 30 weist in dem vorliegenden Ausführungsbeispiel einen ersten als metallischen Konusring ausgebildeten Ring 31 und einen zweiten als metallischen Konusring ausgebildeten Ring 32 auf, die zusammen ein Stoppelement bilden. Zwischen beiden Ringen 31, 32 ist ein elastischer Ringkörper 35, z. B. aus HNBR, angeordnet, der beide Ringe voneinander beabstandet, wobei zwischen beiden Ringen 31, 32 ein Aufnahmeraum 33 ausgebildet ist. Dieser Aufnahmeraum 33 ist mit Partikeln 34 in Form von Stahlkugeln aufgefüllt. Zum Setzkolben 20 hin wird der Aufnahmeraum von einem Zylinderabschnitt 38 des ersten Rings 31 abgeschlossen. Auf diesem Zylinderabschnitt 38 sitzt der zweite Ring 32 und wird dort in seiner Lage über ein Sicherungselement 28, wie z. B. einen Sicherungsring, unter leichter Vorspannung des elastischen Ringkörpers 35 fixiert. Anstelle von Stahlkugeln könnten z. B. auch Keramikkugeln verwendet werden. Die Partikel 34 weisen jeweils einen Durchmesser von ca. 0,2 mm auf und sind vorzugsweise mit Graphitpulver beschichtet. Allgemein können aber auch Partikel 34 mit einem Durchmesser von ca. 0,1 bis 5 mm verwendet werden. Die verwendeten Stahlkugeln weisen eine Härte von ca. 56 HRC auf. Allgemein ist es aber auch möglich Stahlkugeln mit einer Härte von 40 - bis 65 HRC zu verwenden.

Der Aufnahmeraum 33 liegt zwischen einer ersten konischen Begrenzungsfläche 41, die an dem ersten Ring 31 ausgebildet ist und einer zweiten konischen Begrenzungsfläche 42, die an dem zweiten Ring 32 ausgebildet ist. Beide konische Begrenzungsflächen 41, 42 weisen in dem dargestellten Beispiel gleiche Konushalbwinkel α₁, α₂ von 16° auf, wobei Konushalbwinkel im Bereich von 10° - 50° an sich günstig sind. Der Aufnahmeraum 33 weist in dem vorliegenden Ausführungsbeispiel eine Höhe h senkrecht zu seiner Basis, die hier durch eine der beiden konischen Begrenzungsflächen (41, 42) gebildet wird, von 2 mm auf. Diese Höhe h entspricht dabei der Schichtdicke der Partikel 34, die den Aufnahmeraum 33 ausfüllen. Allgemein als günstig erwiesen haben sich Höhen h bzw. Schichtdicken der Partikel 34 im Bereich von ca. 1 bis 5 mm.

An der, der Bolzenführung 12 abgewandten Seite des ersten Rings 31 ist eine Stoppfläche 17 an diesem angeordnet, die in dem Ausführungsbeispiel als Konusfläche ausgebildet ist und gegen die der Setzkolben 20 mit der am Kolbenbund 22 ausgebildeten Gegenstoppfläche 24 prallen kann, um ihn über die Kolbenstoppeinrichtung 30 abzubremsen, wenn dieser bei einer Fehlsetzung oder aufgrund einer zu starken Treibladung bis zu dem ersten Ring 31 nach vorne läuft. Die Gegenstoppfläche 24 ist dabei komplementär zu der Stoppfläche 17 und im vorliegenden Beispiel also ebenfalls als Konusfläche ausgebildet. Ferner ist in dem ersten Ring 31 eine zylindrische Durchführung 39 angeordnet, durch die der Kolbenschaft 21 geführt ist.

Bei einem Aufprallen des Setzkolbens 20 in Setzrichtung 40 auf Kolbenstoppeinrichtung 30 wird der erste Ring 31 in Richtung des Pfeils 43 gegen den elastischen Ringkörper 35 und die Partikel 34 im Aufnahmeraum 33 gedrückt. Die Partikel 34 werden dabei gegen den zweiten Ring 32 gedrückt und ermöglichen ein abgleiten des ersten Rings 31 in Richtung des Pfeils 43 auf den zweiten Ring 32 zu. Aufgrund der hohen Reibung der Partikel 34 untereinander wird dabei ein grosser Teil der Aufprallenergie in Wärme umgesetzt, wobei die plastische Deformation der Partikel 34 nur minimal ist. Die Partikel 34 verhindern ein Prellen des Setzkolbens 20, da die Reibungskräfte zwischen ihnen auch in entgegengesetzter Richtung zur Richtung des Pfeils 43 wirken.

Der elastische Ringkörper 35 wird bei dem Aufschlag des Setzkolbens 20 ebenfalls in axialer Richtung gestaucht. Ferner können die Partikel 34 auch in Richtung auf den elastischen Ringkörper 35 ausweichen und diesen dabei auch seitlich stauchen. Am Ende des Aufprallvorgangs dient der elastische Ringkörper 35 der Rückstellung der Kolbenstoppeinrichtung 30 in seine Ausgangsstellung. Die Partikel 34 liegen nach dieser Rückstellung wieder in ihrer Ausgangskonfiguration vor.

In Fig. 2b ist das vorhergehend beschriebene Setzgerät 10 mit verschlissener Kolbenstoppeinrichtung 30 dargestellt. Der statische Vorlauf des Setzkolbens 20 ist um ca. 2 mm grösser. Das der Bolzenführung 12 zugewandte Ende des Zylinderabschnitts 38, welches mit einer Schrägfläche 48 versehen ist, läuft gegen eine gegensinnige Schräge 27 an der Bolzenführung 12 und wird durch diese nach innen deformiert. Durch dieses nach innen Drücken wird der Setzkolben 20 an seinem Kolbenschaft 21 in der Kolbenstoppeinrichtung 30 verklemmt, so dass der Verschleiss der Kolbenstoppeinrichtung 30 dem Anwender signalisiert wird.

Die Befüllung des Aufnahmeraums 33 mit Partikeln 34 bei der Herstellung oder Wartung der Kolbenstoppeinrichtung 30 kann zum einen durch eine Bohrung in einem der Ringe 31, 32 erfolgen, wobei Rütteln das Setzen der Partikel 34 begünstigt. Zum anderen wäre zur Befüllung ein Beiseiteschieben des elastischen Ringkörpers 35 im vormontierten Zustand möglich.

Als weitere Variante wäre eine mengendosierte Befüllung im Auseinandergeschobenen Zustand der Ringe 31, 32 denkbar. Ferner wäre ein Einlegen eines Ringes aus Partikeln 34 denkbar, der durch den ersten Kolbenstopp-Vorgang mechanisch zerstört würde. Die Partikel 34 stünden somit nach dem erstmaligen Einsatz der Kolbenstoppeinrichtung 30 zur Verfügung.

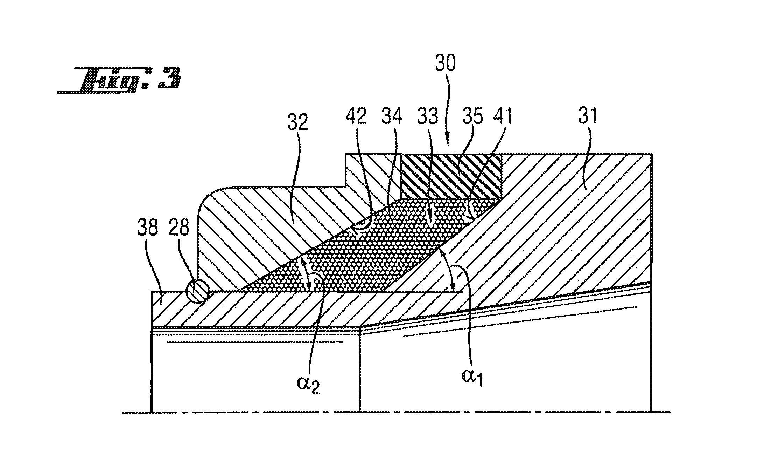

Das in Fig. 3 dargestellte Setzgerät unterscheidet sich nur dadurch von dem vorhergehend in den Figuren 1 bis 2b beschriebenen, dass die beiden Konushalbwinkel α₁, α₂ unterschiedlich gross sind. So beträgt der Konushalbwinkel α₁ der ersten Begrenzungsfläche 41 18° während der Konushalbwinkel α₂ der zweiten Begrenzungsfläche 42 16° beträgt. Hierdurch kann eine bessere Druckverteilung erzielt werden. Wegen weiterer hier nicht erwähnter Bezugszeichen wird vollumfänglich Bezug genommen auf die vorangehende Beschreibung zu den Figuren 1 bis 2 b.

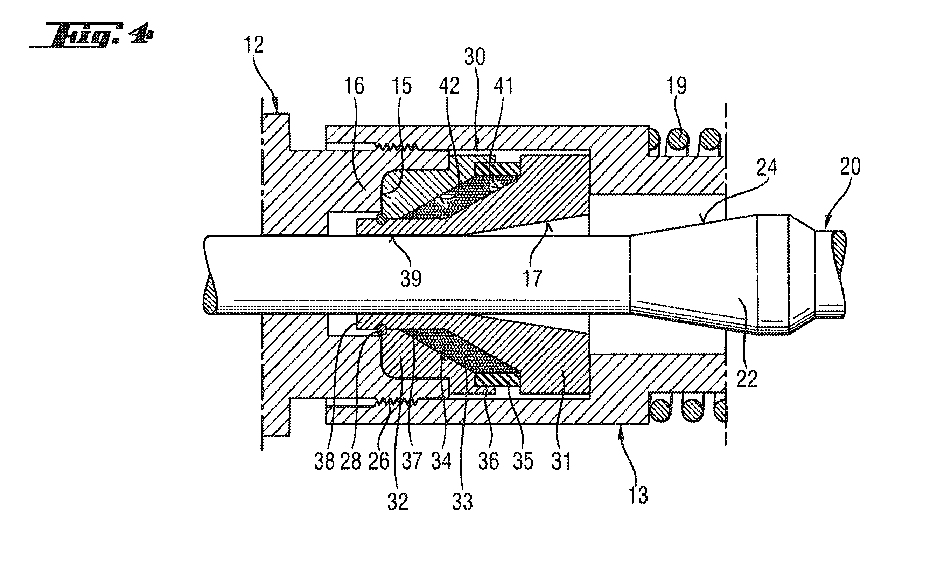

Das in Fig. 4 dargestellte Setzgerät unterscheidet sich nur dadurch von dem vorhergehend in den Figuren 1 bis 2b beschriebenen, dass in dem Aufnahmeraum ein nachgiebiges Element 37, wie. z. B. ein Schaumstoffteil, angeordnet ist, wodurch die Bewegungsfreiheit der Partikel 34 verbessert ist. Ferner wird der elastische Ringkörper 35 nach radial aussen durch einen umlaufenden Vorsprung 36 des zweiten Rings 32 gehalten, wodurch ein völliges Ausweichen des elastischen Ringkörpers 35 nach aussen verhindert ist. Bei dieser Variante kann der Stoppweg des Setzkolbens 20 über das Volumen des nachgiebigen Elements 37 eingestellt werden. Die Funktionstrennung zwischen elastischem Ringkörper 35 und nachgiebigem Element 37 - Rückstellfunktion über den elastischen Ringkörper 35 und Volumenänderungsfunktion über das nachgiebige Element 37 ermöglicht es, die Bremse besser abzustimmen. Als Variante ist es z. B. auch denkbar, dass der Rückstellgummi komplett von einer Stahlhülse umschlossen ist. Wegen weiterer hier nicht erwähnter Bezugszeichen wird vollumfänglich Bezug genommen auf die vorangehende Beschreibung zu den Figuren 1 bis 2 b.

## Patentansprüche

1. Setzgerät, zum Eintreiben von Befestigungselementen in einen Untergrund, mit einer Kolbenführung (13), die einen Hohlraum (14) aufweist, in dem ein Setzkolben (20) axial versetzbar angeordnet ist, wobei der Setzkolben (20) einen Kolbenkopf (23) und einen Kolbenschaft (21) aufweist,
mit einer sich an die Kolbenführung (13) anschliessenden Bolzenführung (12)
und mit einer Kolbenstoppeinrichtung (30) für den Setzkolben (20), die an einem der Bolzenführung (12) zugewandten Endbereich des Hohlraums (14) angeordnet ist, wobei die Kolbenstoppeinrichtung (30) ein Stoppelement für den Setzkolben (20) aufweist,
wobei das Stoppelement einen ersten Ring (31) und einen zweiten Ring (32) aufweist, die koaxial zueinander liegen und gegeneinander versetzbar sind und über ein elastisches Element gegeneinander abgestützt sind,
**dadurch gekennzeichnet, dass** zwischen dem ersten (31) und dem zweiten Ring (32) ein mit Partikeln (34) befüllter und gegenüber diesen Partikeln (34) dichter Aufnahmeraum (33) angeordnet ist.

2. Setzgerät, nach Anspruch 1, **dadurch gekennzeichnet, dass** sich der Aufnahmeraum (33) zwischen zwei sich gegenüberliegenden konischen Begrenzungsflächen (41, 42) der beiden Ringe (31, 32) erstreckt.

3. Setzgerät, nach Anspruch 1, **dadurch gekennzeichnet, dass** das elastische Element ein elastischer Ringkörper (35) ist, der zwischen dem ersten Ring (31) und dem zweiten Ring (32) angeordnet ist und der den Aufnahmeraum (33) nach radial aussen hin abschliesst.

4. Setzgerät, nach Anspruch 1, **dadurch gekennzeichnet, dass** die Partikel (34) eine Korngrösse zwischen 0,1 mm und 5,0 mm aufweisen.

5. Setzgerät, nach Anspruch 1 oder 4, **dadurch gekennzeichnet, dass** die Partikel (34) umfänglich mit einem Schmiermittel versehen sind.

6. Setzgerät, nach einem der Ansprüche 1 bis 5, **dadurch gekennzeichnet, dass** die Partikel (34) als Stahlkugeln ausgebildet sind, die eine Härte von 40 - 65 HRC aufweisen.

7. Setzgerät, nach einem der Ansprüche 1 bis 6, **dadurch gekennzeichnet, dass** die konischen Begrenzungsflächen (41, 42) jeweils gleiche Konushalbwinkel (α₁, α₂) in einem Bereich von 10° bis 50° aufweisen.

8. Setzgerät, nach einem der Ansprüche 1 bis 6, **dadurch gekennzeichnet, dass** die konischen Begrenzungsflächen (41, 42) Konushalbwinkel (α₁, α₂) aufweisen, die in einem Bereich von 10° bis 50° liegen und die sich um 0,5° bis 5° unterscheiden.

9. Setzgerät, nach einem der Ansprüche 1 bis 8, **dadurch gekennzeichnet, dass** in dem Aufnahmeraum (33) noch wenigstens ein nachgiebiges Element (37) angeordnet ist.

## Claims

1. Setting tool for driving fastening elements into a substrate, comprising a piston guide (13) having a hollow space (14) in which a setting piston (20 is axially displaceably arranged, the setting piston (20) having a piston head 23) and a piston body (21), a bolt guide (12) adjoining the piston guide (13)
and a piston stop device (30) for the setting piston (20) arranged in an end region of the hollow space (14) directed towards the bolt guide (12), the piston stop device (30) having a stop element for the setting piston (20) and the step element having a first ring (31) and a second ring (32) disposed coaxially with one another, displaceable relative to one another and supported against one another by means of a flexible element, **characterised in that** a receiving space (33) filled with particles (34) and sealed with respect to these particles (34) i; arranged between the first ring (31) and the second ring (32).

2. Setting tool according to claim 1, **characterised in that** the receiving space (33) extends between two opposing conical delimiting surfaces (41, 42) of the two rings (31, 32).

3. Setting tool according to claim 1, **characterised in that** the flexible element is a flexible ring body (35) arranged between the first ring (31) and the second ring (32) and closing the receiving space (33) radially towards the outside.

4. Setting tool according to claim 1, **characterised in that** the particles (34) have a particle size of between 0.1 mm and 5.0 mm.

5. Setting tool according to claim 1 or claim 4, **characterised in that** the particles (34) arc provided circumferentially with a lubricant.

6. Setting tool according to one of claims 1 to 5, **characterised in that** the particles (34) are designed as steel balls having a hardness of 40-65 HRC.

7. Setting tool according to one of claims 1 to 6, **characterised in that** the conical delimiting surfaces (41, 42) each have the same cone half-angle (α₁, α₂) in a range of 10° to 50°.

8. Setting tool according to one of claims 1 to 6, **characterised in that** the conical delimiting surfaces (41, 42) have cone half-angles (α₁, α₂) lying in a range of 10" to 50° and differing from one another by 0.5° to 5".

9. Setting tool according to one of claims 1 to 8, **characterised in that** a least one other resilient element (37) is arranged in the receiving space (33).

## Revendications

1. Outil de scellement pour enfoncer des éléments de fixation dans un support, comprenant un guide-piston (13) pourvu d'une cavité (14) dans laquelle un piston-poussoir (20) est disposé en translation axiale, le piston-poussoir (20) comportant une tête de piston (23) et une tige de piston (21), comprenant un guide-goujon (12) raccordé au guide-piston (13), et comprenant pour le piston-poussoir (20) un dispositif d'arrêt de piston (30) qui est disposé dans une zone d'extrémité de la cavité (14) tournée vers le guide-goujon (12), le dispositif d'arrêt de piston (30) comportant un élément d'arrêt pour le piston-poussoir (20), l'élément d'arrêt comportant un premier anneau (31) et un second anneau (32), lesquels sont coaxiaux et déplaçables l'un par rapport à l'autre et prennent appui l'un contre l'autre par l'intermédiaire d'un élément élastique, **caractérisé en ce qu'**un espace de réception (33) empli de particules (34) et étanche à ces particules (34) est ménagé entre le premier anneau (31) et le second (32).

2. Outil de scellement selon la revendication 1, **caractérisé en ce que** l'espace de réception (33) s'étend entre deux surfaces de délimitation coniques opposées (41, 42) des deux anneaux (31, 32).

3. Outil de scellement selon la revendication 1, **caractérisé en ce que** l'élément élastique est un corps annulaire élastique (35) qui est disposé entre le premier anneau (31) et le second anneau (32) et qui ferme l'espace de réception (33) radialement vers l'extérieur.

4. Outil de scellement selon la revendication 1, **caractérisé en ce que** les particules (34) présentent une granulométrie comprise entre 0,1 mm et 5,0 mm.

5. Outil de scellement selon la revendication 1 ou 4, **caractérisé en ce que**, à leur périphérie, les particules (34) sont revêtues de lubrifiant.

6. Outil de scellement selon une des revendications 1 à 5, **caractérisé en ce que** les particules (34) sont conformées en billes d'acier qui présentent une dureté ce 40 à 65 HRC.

7. Outil de scellement selon une des revendications 1 à 6, **caractérisé en ce que** les surfaces de délimitation coniques (41, 42) présentent chacune un demi-angle de conicité (α1, α2) compris entre 10° et 50°.

8. Outil de scellement selon une des revendications 1 à 6, **caractérisé en ce que** les surfaces de délimitation coniques (41, 42) présentent des demi-angles de conicité (α1, α2) qui sont compris entre 10° et 50° et qui diffèrent de 0,5° à 5°.

9. Outil de scellement selon une des revendications 1 à 8, **caractérisé en ce que** dans l'espace de réception (33) est également disposé au moins un élément déformable (37).
